# EUROPÄISCHE PATENTSCHRIFT

(11) **EP 0 670 243 B1**
(45) Veröffentlichungstag und Bekanntmachung des Hinweises auf die Patenterteilung: **16.07.1997**
(21) Anmeldenummer: 95102722.6
(22) Anmeldetag: 25.02.1995
(51) Int. Cl.: B60Q 1/28

(54) **Lichteinheit für Fahrzeuge**
Lighting unit for vehicle
Unité d'éclairage pour véhicule

(30) Priorität: 03.03.1994 DE 4407006
(43) Veröffentlichungstag der Anmeldung: 06.09.1995
(73) Patentinhaber: Hella KG Hueck & Co., 59552 Lippstadt (DE)
(72) Erfinder: Rottländer, Olaf, D-59557 Lippstadt (DE); Vogt, Heinrich, D-33178 Borchen (DE)

(56) Entgegenhaltungen:
- DE-A- 3 426 711
- DE-A- 3 726 834
- DE-A- 4 238 285
- DE-U- 9 413 615

## Beschreibung

Die Erfindung betrifft eine Lichteinheit für Fahrzeuge, mit einem Scheinwerfer und einer seitlich des Scheinwerfers angeordneten Leuchte, welche in ein Führungselement des Scheinwerfers mit einem entgegen der Lichtaustrittsrichtung gerichteten Rastarm eingeschoben ist, der mit einem Rastelement an seinem freien Endabschnitt einen Wandabschnitt des Scheinwerfers selbstrastend hintergreift und mittels eines verstellbaren Verriegelungselements in eine entriegelte und verriegelte Raststellung bringbar ist.

Eine solche Lichteinheit für Fahrzeuge ist aus der DE 42 38 285 bekannt. Der Scheinwerfer und die Leuchte weisen jeweils eine lichtdurchlässige Abschlußscheibe auf, welche mit ihrer optisch wirksamen Vorderseite bündig ineinander übergehen. Die beiden lichtdurchlässigen Abschlußscheiben schließen jeweils ein aus Kunststoff bestehendes topfförmiges Gehäuse ab. Die Gehäuse sind in einem Abstand zueinander angeordnet und weisen sich zugewandte Seitenwände auf. An die Seitenwand des Gehäuses der Leuchte ist eine U-förmig ausgeführte Wandung im Bereich des die Schenkel verbindenden Stegs und des unteren Schenkels mit einer schmalen Seitenfläche angeformt. Die beiden Schenkel der U-förmigen Wandung weisen mit ihrem freien Ende in Montagerichtung der Leuchte. Der untere Schenkel ist das Abstützteil und der obere Schenkel der federnde Rastarm, welcher ausgehend von dem Bereich des Stegs der U-Form zu seinem freien Ende hin freistehend ist. Das Rastelement ist an dem freien Ende des Rastarms angeformt und nach oben hin gerichtet. Das Führungselement des Scheinwerfers ist eine an die Seitenwand des Gehäuses angebrachte Aussparung, welche sowohl zur Seite der Leuchte hin als auch in und entgegen der Lichtaustrittsrichtung geöffnet ist. Die Aussparung ist nach oben und nach unten hin durch jeweils eine an die Seitenwand des Gehäuses des Scheinwerfers angeformte Wand begrenzt, welche zur Vorderseite der Lichteinheit an ihrer Innenseite Auflaufflächen aufweisen, durch welche sich der Abstand zwischen ihnen in Richtung zu der Vorderseite der Lichteinheit hin vergrößert. Die Leuchte kann, nachdem der Scheinwerfer in eine Fahrzeugöffnung eingesetzt ist, in die seitlich neben dem Scheinwerfer verbleibende Fahrzeugöffnung bis gegen einen Anschlag eingeschoben werden. Als Anschlag dienen ein Rand der Karosserieöffnung und an den vorderen Rand des Gehäuses des Scheinwerfers angeformte Taschen, an deren entgegen der Einsetzrichtung der Leuchte gerichteten Rand Schultern von an das Gehäuse der Leuchte angeformten Zungen anliegen, die in die Taschen eingeschoben sind. Beim Einsetzen der Leuchte in die seitlich neben dem Scheinwerfer verbleibende Karosserieöffnung fädelt sich die U-förmige Wandung wegen den Auflaufflächen der Aussparung leicht und einfach in die Aussparung hinein, wobei die Rastnase des Rastarms bei der Anlage des Abstützelementes an einer Wand der Aussparung unter elastischer Verformung des Rastarms nach unten hin gedrückt wird und in der Endstellung den in Einsetzrichtung weisenden freien Wandabschnitt der der Nase benachbarten Wand der Aussparung hintergreift. Da die Aussparung zur Leuchte hin geöffnet ist, kann die Leuchte zum Scheinwerfer und zur Karosserie hin ausgerichtet werden. Da im Fahrzeuginneren die Verrastungsstelle zwischen dem Rastarm und dem Wandabschnitt des Scheinwerfers nicht oder nur schlecht einsehbar ist, kann zumindest durch eine schnelle Sichtkontrolle nicht festgestellt werden, ob nach dem Einschieben der Leuchte der Rastarm verrastet ist. Um den Rastarm sicher in seiner Raststellung zu halten, kann dieser durch das verstellbare Verriegelungselement in seiner Raststellung blockiert werden. Das Verriegelungselement ist ein Bart, welcher über ein Filmscharnier mit dem Gehäuse der Leuchte verbunden ist und mittels eines stabförmigen Hilfswerkzeuges zwischen den Rastarm und das Abstützelement klemmend einschwenkbar ist und mit ihnen verrastet. Hierbei ist es nach einem Verschwenken des Bartes nicht ohne Sichtkontroll sicher, daß er zwischen den Rastarm und das Abstützteil eingeschwenkt ist und außerdem kann das stabförmige Hilfswerkzeug beim Einschwenken des Bartes leicht abrutschen. Bei einer Demontage der Blinkleuchte, welche zum Beispiel für einen Lampenwechsel der Blinkleuchte notwendig sein kann, ist ein Herausschwenken des Bartes umständlich und zeitaufwendig.

Aufgabe der Erfindung ist es, die im Oberbegriff des Anspruchs 1 beschriebene Lichteinheit für Fahrzeuge derart zu gestalten, daß nach dem Einführen des Rastarms der Leuchte in das Führungselement des Scheinwerfers das Verriegelungselement nur dann verstellbar ist, wenn der Rastarm der Leuchte mit dem Wandabschnitt des Scheinwerfers verrastet ist. Darüber hinaus soll keine Sichtkontrolle notwendig sein, um festzustellen, ob der Rastarm verrastet ist und der Bart den Rastarm in seiner Raststellung verriegelt. Diese Aufgabe wird nach der Erfindung dadurch gelöst, daß
- das Verriegelungselement ein von dem freien Endabschnitt des federnden Rastarms getragener Drehknopf ist, welcher mit einem Bart zum freien Ende eines Abstützelementes hin gerichtet ist.
- der Bart und eine Ausnehmung des Abstützelementes eine so aufeinander abgestimmte Größe, Form und Lage aufweisen, daß der Bart in einer zur Entriegelung des Rastarms dienenden Stellung des Drehknopfes beim Ver- und Entrasten des Rastelementes in die Ausnehmung eintauchbar ist und in einer zur Verriegelung des Rastarms dienenden Stellung des Drehknopfes zumindest mit einem Abschnitt zu einer Seitenfläche des Abstützelementes hin gerichtet ist.

Bei einer solchen vorteilhaften Ausgestaltung taucht der Drehknopf mit seinem Bart solange in die Ausnehmung des Abstützteils ein bis der Rastarm verrastet. Deshalb ist es sicher, daß der Drehknopf erst in der verrasteten Stellung des Rastarms in die den Rastarm verriegelnde Raststellung bringbar ist. In diesem Zusammenhang ist es weiterhin vorteilhaft, wenn der Drehknopf auf der dem Bart abgewandten Seite eine Drehvorrichtung aufweist, welche ein in die Deckfläche des Drehknopfes eingebrachter Schlitz für ein stabförmiges Hilfswerkzeug ist. Ein solches Hilfswerkzeug kann ein üblicher Schraubendreher sein, welcher nach seinem Eingriff in den Schlitz des Drehknopfes nur um seine Längsachse gedreht werden muß, um den Drehknopf in die eine oder andere Endstellung zu bringen.

Weiterhin ist es vorteilhaft, wenn der Rastarm sich zu seinem freien Ende hin mit dem den Drehknopf tragenden freien Endabschnitt über das Rastelement hinaus erstreckt und eine als Lagerstelle für den Drehknopf dienende Öffnung aufweist, die durch eine zangenartige Ausgestaltung des freien Endabschnitts zum freien Ende des Rastarms hin geöffnet ist, wobei die Schenkel der Zange federnd ausgeführt sind und der Drehknopf vom freien Ende des Rastarms her selbstrastend zwischen die Schenkel der Zange eingesetzt sind. Bei einer solchen Ausgestaltung ist der Drehknopf einfach und schnell zu montieren, ohne daß zusätzliche Befestigungsmittel verwendet werden müssen. In diesem Zusammenhang ist es weiterhin vorteilhaft, wenn der Drehknopf zwischen dem Bart und der Drehvorrichtung eine Einschnürung aufweist, in welche zumindest ein Schenkel mit einem nach innen springenden Vorsprung eingreift. Dadurch ist der Drehknopf sicher in Richtung seiner Drehachse gehalten.

Vorteilhaft ist es weiterhin, wenn an die Mantelfläche des Drehknopfes mindestens ein radial nach außen ragender Ansatz angeformt ist, welcher zwischen zwei als Anschlag dienende Flächen des Endabschnitts des Rastarms bewegbar ist und zusammen mit den beiden Anschlägen die beiden Endstellungen des Drehknopfes definiert. Eine solche Lösung ist sehr einfach und kostengünstig herstellbar. In diesem Zusammenhang ist es weiterhin vorteilhaft, wenn ein erster Ansatz des Drehknopfes zwischen dem freien Endabschnitt der Schenkel des zangenartigen Endabschnittes des Rastarms angeordnet ist und ein zweiter Ansatz des Drehknopfes auf der dem ersten Ansatz abgewandten Seite des Drehknopfes angebracht ist und zwischen zwei in die Einschnürung des Drehknopfes eingreifenden Vorsprüngen der Schenkel des zangenartigen Endabschnitts angeordnet ist, wobei die freien Enden der Schenkel und ihre Vorsprünge jeweils ein Anschlag für zwei Endstellungen des Drehknopfes sind. Dadurch besteht zwischen einem Ansatz und der Drehachse kein Drehmoment, welches den Drehknopf aus seiner Raststellung herauslösen könnte.

Ein weiterer Vorteil ist es, wenn der Drehknopf in seinen beiden Endstellungen mit Verrastungsmarken des Rastarms zusammenwirkt, wobei die Verrastungsmarken in die Lagerschale eingebrachte Erhöhungen oder Vertiefungen sind, mit welchen Vertiefungen oder Erhöhungen der Mantelfläche des Drehknopfes zusammenwirken. Dadurch ist der Drehknopf sicher in seinen Endstellungen gehalten.

Zudem ist es vorteilhaft, wenn die Drehachse des Drehknopfes durch die Ausnehmung des Abstützelementes und den Bart hindurchgeht und eine Mittellinie des Bartes ist. Bei einer solchen Ausgestaltung baut der Drehknopf sehr klein.

Außerdem ist es vorteilhaft, wenn die Ausnehmung des Abstützelementes ein in Längsausdehnung des Rastarms verlaufender Längsschlitz ist, welcher zum freien Ende des Rastarms hin geöffnet ist. Dadurch kann der Längsschlitz durch die die Rückseite des Gehäuses der Leuchte formende Werkzeughälfte mit entformt werden.

Ferner ist es vorteilhaft, wenn die Ausnehmung auf der dem Bart zugewandten Seite an ihren Rändern eine Auflaufschräge für den Bart aufweist. Die Auflaufschrägen dienen für den Bart als Einfädelungshilfe, wenn er beim Einschieben des Rastarms in das Führungselement des Scheinwerfers in die Ausnehmung eintauchen muß.

Von Vorteil ist es weiterhin, wenn die Drehachse des Drehknopfes in der Anbaulage der Lichteinheit annähernd vertikal verläuft, wobei der Rastarm oberhalb des Abstützelementes angeordnet ist. Bei einer solchen Ausgestaltung kann der Drehknopf von der oberen Seite der Lichteinheit her mittels eines stabförmigen Hilfswerkzeuges verstellt werden.

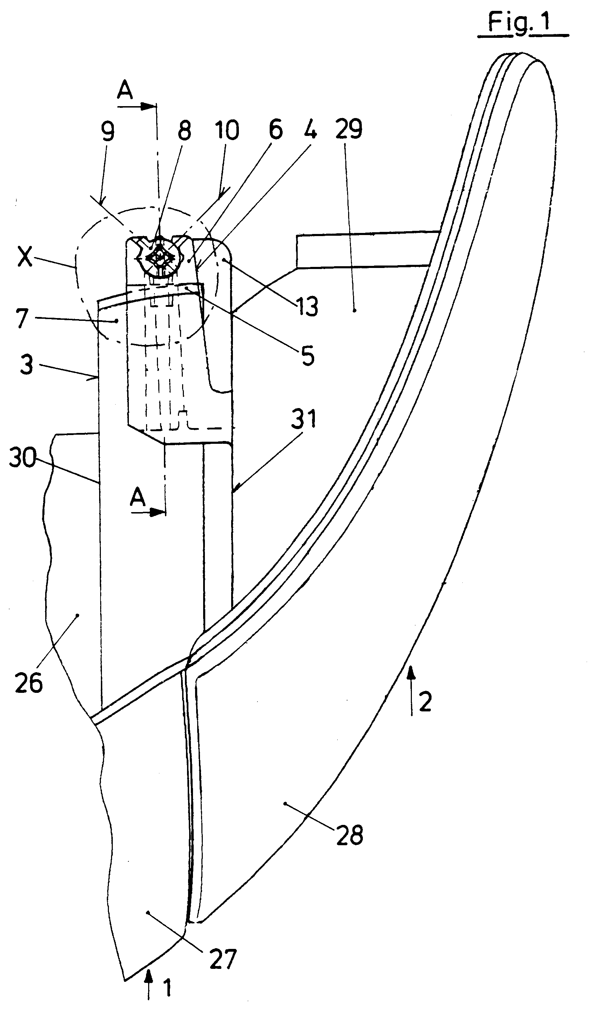

Ein Ausführungsbeispiel der Erfindung ist in den Zeichnungen dargestellt, und zwar zeigen
- Figur 1: eine Teilansicht von oben auf eine Lichteinheit mit einem Scheinwerfer und einer lösbar mit dem Scheinwerfer verbundenen Leuchte;

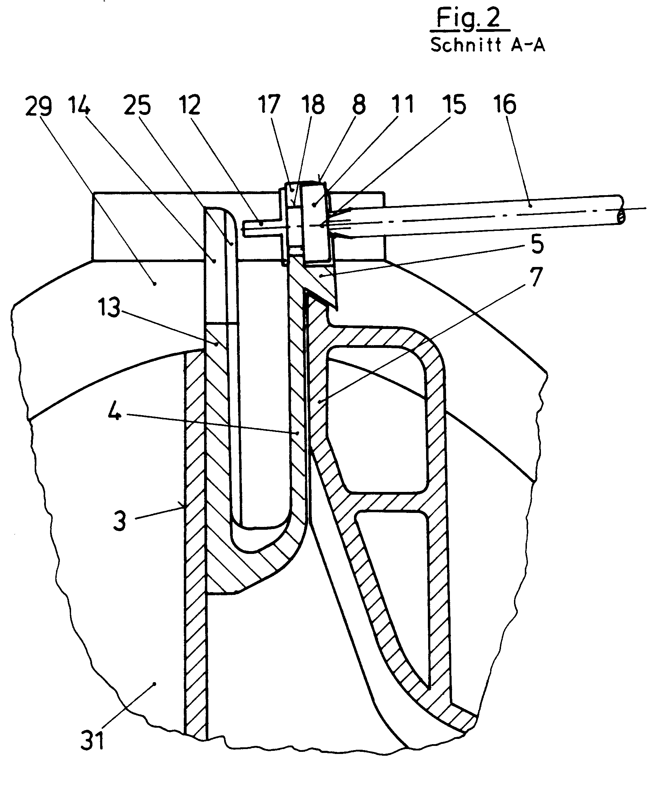

- Figur 2: einen Schnitt nach der Linie A-A in Figur 1, mit einem die lösbare Verbindung verriegelnden Verriegelungselement;
- Figur 3: einen Schnitt nach der Linie A-A in Figur 1, mit dem Verriegelungselement in der entriegelten Stellung und mit dem Scheinwerfer und der Leuchte bei ihrem Zusammenfügen;

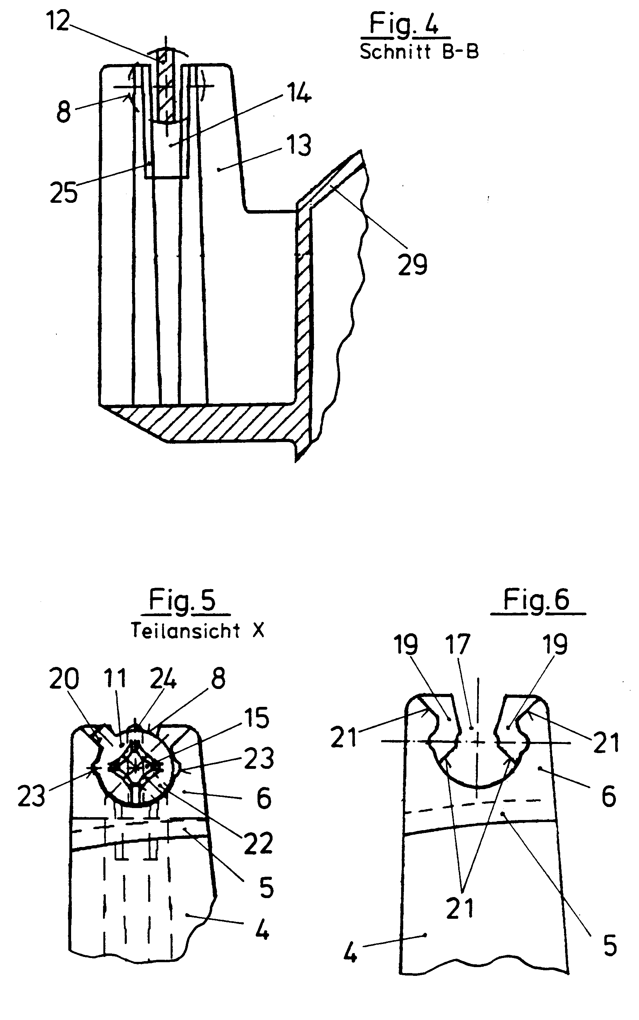

- Figur 4: einen Schnitt nach der Linie B-B in Figur 1;
- Figur 5: eine Teilansicht x der Figur 1 und
- Figur 6: die Teilansicht x der Figur 5 ohne das Verriegelungselement.

Die Lichteinheit besteht aus einem Scheinwerfer (1) und einer seitlich neben dem Scheinwerfer angeordneten Leuchte (2). Die Leuchte (2) ist mit dem Scheinwerfer (1) lösbar verbunden und kann entweder zusammen mit ihm in eine Karosserieöffnung (nicht dargestellt) eingesetzt werden oder nachdem der Scheinwerfer (1) in die Karosserieöffnung eingesetzt ist, sowohl montiert als auch demontiert werden. Eine Montage und Demontage der Leuchte (2) ohne den Scheinwerfer (1) kann notwendig sein, wenn die Lampe der Leuchte (2) gewechselt werden muß und/oder die Leuchte (2) sowohl von dem Scheinwerfer (1) als auch der Karosserie getragen ist. Die zwischen der Leuchte (2) und dem Scheinwerfer (1) bestehende lösbare Verbindung ist selbstrastend hergestellt und kann mittels eines stabförmigen Hilfswerkzeuges (16), wie zum Beispiel einem Schraubendreher, von der oberen Seite der Lichteinheit her durch die Verstellung eines Verriegelungselementes (8) verriegelt und entriegelt werden. Das Entriegeln und Verriegeln der lösbaren Verbindung erfolgt durch einfaches Drehen des Schraubendrehers (16) um seine Achse. Das Verriegelungselement (8) kann erst verstellt werden, wenn die rastende Verbindung zwischen der Leuchte (2) und dem Scheinwerfer (1) hergestellt ist.

Der Scheinwerfer (1) besteht aus einem aus Kunststoff hergestellten topfförmigen Gehäuse (26), welches auf seiner Vorderseite durch eine lichtdurchlässige Abschlußscheibe (27) verschlossen ist. Zu der Abschlußscheibe (27) verläuft bündig eine lichtdurchlässige Abschlußscheibe (28) der Leuchte (2). Die Abschlußscheibe (28) der Leuchte (2) deckt ein aus Kunststoff bestehendes topfförmiges Gehäuse (29) ab. Das Gehäuse (26) des Scheinwerfers (1) und das Gehäuse (29) der Leuchte (2) weisen in einem Abstand zueinander sich zugewandte Seitenwände (30, 31) auf. An den vorderen Rand der Seitenwand (31) des Gehäuses (29) der Leuchte (2) sind zwei in Einsetzrichtung der Leuchte (2) weisende federnde Zungen angeformt, welche jeweils in eine Tasche der Seitenwand (30) des Gehäuses (26) des Scheinwerfers (1) eingeschoben sind, bis sie mit Schultern an dem entgegen der Einsetzrichtung der Leuchte (2) gerichteten Rand der Tasche des Gehäuses (26) anschlagen (nicht dargestellt). Da die Zungen federnd ausgeführt sind, bildet die Tasche eine vertikale Schwenkachse für die Leuchte (2), so daß die Leuchte mit ihrem äußeren Rand der Abschlußscheibe (28) zum Scheinwerfer und zu der an sie angrenzenden Karosserie ausgerichtet werden kann.

An die Seitenwand (31) des Gehäuses (29) der Leuchte (2) ist ein Abstützteil (13) und ein oberhalb des Abstützteils (13) angeordneter federnder Rastarm (4) angeformt. Das Abstützteil (13) und der Rastarm (4) sind in Einsetzrichtung der Leuchte (2) gerichtete Schenkel einer U-förmigen Wandung, welche im Bereich ihres die Schenkel verbindenden Stegs und des unteren Schenkels mit ihrer schmalen Seitenfläche an die Seitenwand (31) des Gehäuses (29) der Leuchte (2) angeformt ist, während der federnde Rastarm (4) ausgehend von dem Steg zu seinem freien Ende hin freistehend ist. Der Rastarm (4) weist einen verdickten freien Endabschnitt (6) auf, welcher mit seiner in Lichtaustrittsrichtung gerichteten Seite ein nach oben hin gerichtetes Rastelement (5) ist und das von einem Drehknopf (11) gebildete Verriegelungselement (8) trägt. Der verdickte freie Endabschnitt (6) des Rastarms (4) ist zangenartig ausgeführt, wobei die Schenkel der Zange in Einsetzrichtung der Leuchte weisen und zwischen sich eine Lagerschale für den Drehknopf (11) begrenzen. Der Drehknopf (11) ist von dem freien Ende des Rastarms (4) her gesehen zwischen die federnden Schenkel des zangenartigen Endabschnitts (6) selbstrastend eingesetzt. Hierbei greifen die an beide Schenkel angebrachten Vorsprünge (19) in eine Einschnürung (18) des Drehknopfes (11), welcher zylindrisch ausgeführt ist, ein. Der Drehknopf (11) weist auf der dem Abstützelement (13) abgewandten Seite eine Drehvorrichtung (15) auf, welche ein in die Deckfläche des Drehknopfes (11) eingebrachter Kreuzschlitz für den Schraubendreher (16) ist. An die Mantelfläche des Drehknopfes (11) ist zwischen der Einschnürung (18) und der Drehvorrichtung (15) ein radial nach außen ragender Ansatz (20) angeformt, welcher zwischen den freien Endabschnitten der Schenkel des zangenartig ausgeführten Endabschnitts (6) angeordnet ist. Die freien Endabschnitte der Schenkel des zangenartig ausgeführten Endabschnittes (6) weisen Flächen auf, welche als Anschlag (21) für den Ansatz (20) dienen. Somit ist der Drehknopf (11) in zwei Endstellungen drehbar. Auf der dem letzteren Ansatz (20) gegenüberliegenden Seite des Drehknopfes ist in die Einschnürung (18) des Drehknopfes (11) ein Ansatz (22) eingeformt, welcher zwischen den beiden Vorsprüngen (19) verdrehbar ist und in den Endstellungen des Drehknopfes an den Anschlägen (21) der Vorsprünge (19) anliegt. In den beiden Endstellungen des Drehknopfes (11) wirkt der Drehknopf (11) mit Verrastungsmarken (23) des Endabschnittes (6) zusammen. Die Verrastungsmarken (23) sind Vertiefungen, in welche der Drehknopf (11) mit Erhöhungen (24) selbstrastend eingreift.

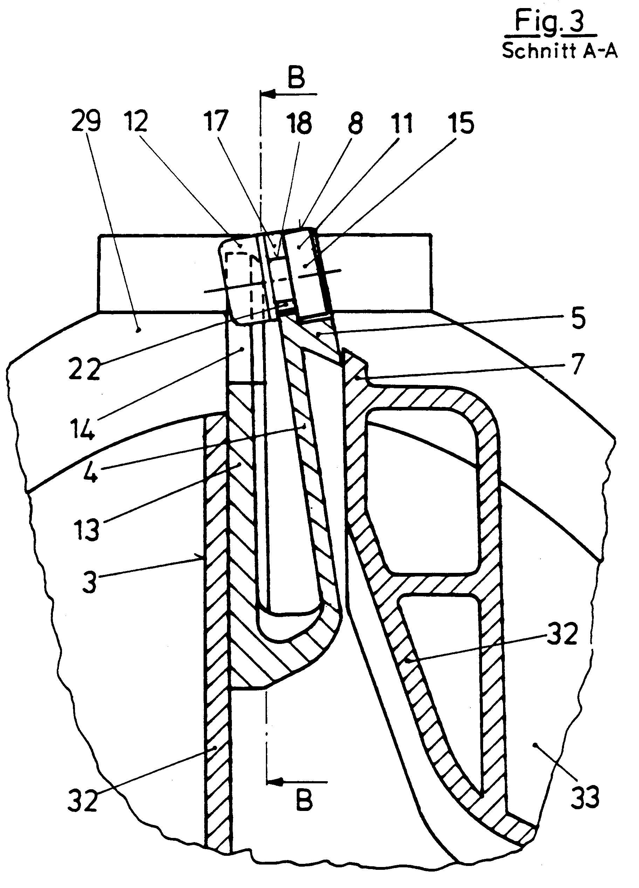

Auf der der Drehvorrichtung (15) abgewandten Seite des Drehknopfes (11) ist an seiner Deckfläche ein Bart (12) angeformt, welcher sich bis zu der Mantelfläche des zylindrischen Drehknopfes (11) hin erstreckt und dessen Mittellinie mit der Drehachse des Drehknopfes (11) zusammenfällt. In der einen Endstellung des Drehknopfes (11) verläuft der Bart (12) mit seinen breiten Seitenflächen in Einsetzrichtung der Leuchte (2), während er in der anderen Endstellung des Drehknopfes (11) mit seinen breiten Seitenflächen quer zur Einsetzrichtung der Leuchte (2) verläuft. Der Bart (12) ist mit seinem freien Ende zum freien Endabschnitt des Abstützelementes (13) hin gerichtet und weist zu diesem einen kleinen Abstand auf. In den freien Endabschnitt des Abstützelementes (13) ist eine Ausnehmung (14) eingebracht, welche ein in Einsetzrichtung der Leuchte (2) verlaufender und zum freien Ende des Abstützelementes (13) hin geöffneter Längsschlitz (14) ist. In der einen Endstellung (Figur 3) des Drehknopfes (11) verläuft der Bart (12) innerhalb des Längsschlitzes (14) und taucht beim Drücken des Rastarms (4) zum Abstützteil (13) hin in den Längsschlitz (14) ein. Damit der Bart (12) sich leicht in den Längsschlitz (14) einfädelt, sind an den dem Bart (12) zugewandten Rändern des Längsschlitzes (14) Auflaufschrägen (25) angebracht.

An die Seitenwand (30) des Gehäuses (26) des Scheinwerfers (1) ist ein Führungselement (3) angebracht, welches von zwei in einem Abstand zueinander verlaufenden und mit ihren Schmalseiten an die Seitenwand (30) angeformten Wänden gebildet ist. Eine Wand (32) verläuft in einem der Vorderseite des Scheinwerfers (1) benachbarten Abschnitt schräg und vergrößert den Abstand zwischen den beiden Wänden (32) trichterförmig. Dadurch kann bei der Montage der Leuchte (2) ihr Abstützelement (13) zusammen mit dem Rastarm (4) leicht und einfach in die zwischen den beiden Wänden (32) bestehende Aussparung eingeführt werden. Dabei liegt das Abstützelement (13) an einer Wand (32) flächig an und der Rastarm (3) ist mit seinem Rastelement (5) zum Abstützelement (13) hin gedrückt bis das Rastelement (5) den in Einsetzrichtung der Leuchte (2) weisenden freien Wandabschnitt (7) der Wand (32) selbstrastend hintergreift. Beim Einschieben taucht der Bart (12) des Drehknopfes (11) in den Längsschlitz (14) des Abstützteils (13) ein. Nach dem Verrasten des Rastarms (4) kann der Drehknopf (11) mit einem Schraubendreher (16) von einer den Rastarm (4) entriegelnden Stellung (9) in eine den Rastarm verriegelnde Stellung (10) verdreht werden. Hierbei muß zwischen dem Bart (12) und dem Abstützelement (13) ein kleinerer Abstand bestehen als der zum Entrasten des Rastarms (4) notwendig Weg groß ist.

## Patentansprüche

1. Lichteinheit für Fahrzeuge, mit einem Scheinwerfer (1) und einer seitlich des Scheinwerfers (1) angeordneten Leuchte (2), welche in ein Führungselement (3) des Scheinwerfers (1) mit einem entgegen der Lichtaustrittsrichtung gerichteten Rastarm (4) eingeschoben ist, der mit einem Rastelement (5) an seinem freien Endabschnitt (6) einen Wandabschnitt (7) des Scheinwerfers (1) selbstrastend hintergreift und mittels eines verstellbaren Verriegelungselementes (8) in eine entriegelte und verriegelte Raststellung (9 bzw. 10) bringbar ist, dadurch gekennzeichnet, daß
- das Verriegelungselement (8) ein von dem freien Endabschnitt (6) des federnden Rastarms (4) getragener Drehknopf (11) ist, welcher mit einem Bart (12) zum freien Ende eines Abstützelementes (13) hin gerichtet ist,
- der Bart (12) und eine Ausnehmung (14) des Abstützelementes (13) eine so aufeinander abgestimmte Größe, Form und Lage aufweisen, daß der Bart (12) in einer zur Entriegelung des Rastarms (4) dienenden Stellung (9) des Drehknopfes (11) beim Ver- und Entrasten des Rastelementes (5) in die Ausnehmung (14) eintauchbar ist und in einer zur Verriegelung des Rastarms (4) dienenden Stellung (10) des Drehknopfes (11) zumindest mit einem Abschnitt zu einer Seitenfläche des Abstützelementes (13) hin gerichtet ist.

2. Lichteinheit nach Anspruch 1, dadurch gekennzeichnet, daß der Drehknopf (11) auf der dem Bart (12) abgewandten Seite eine Drehvorrichtung (15) aufweist.

3. Lichteinheit nach einem der Ansprüche 1 oder 2, dadurch gekennzeichnet, daß der Rastarm (4) sich zu seinem freien Ende hin mit dem den Drehknopf (11) tragenden freien Endabschnitt (6) über das Rastelement (5) hinaus erstreckt.

4. Lichteinheit nach Anspruch 3, dadurch gekennzeichnet, daß in den freien Endabschnitt (6) des Rastarms (4) eine als Lagerstelle für den Drehknopf (11) dienende Öffnung (17) eingebracht ist.

5. Lichteinheit nach Anspruch 4, dadurch gekennzeichnet, daß die Öffnung (17) in dem freien Endabschnitt (6) des Rastarms (4) durch eine zangenartige Ausgestaltung des freien Endabschnitts (6) zum freien Ende des Rastarms (4) hin geöffnet ist, wobei die Schenkel der Zange federnd ausgeführt sind und der Drehknopf (11) vom freien Ende des Rastarms (4) her selbstrastend zwischen die Schenkel der Zange eingesetzt sind.

6. Lichteinheit nach einem der Ansprüche 1 bis 5, dadurch gekennzeichnet, daß an die Mantelfläche des Drehknopfes (11) mindestens ein radial nach außen ragender Ansatz (20) angeformt ist, welcher zwischen zwei als Anschlag (21) dienenden Flächen des Endabschnitts (6) des Rastarms (4) bewegbar ist und zusammen mit den beiden Anschlägen (21) die beiden Endstellungen des Drehknopfes (11) definiert.

7. Lichteinheit nach einem der vorstehenden Ansprüche, dadurch gekennzeichnet, daß der Drehknopf (11) in seinen beiden Endstellungen (8, 9) mit Verrastungsmarken (23) des Rastarms (4) zusammenwirkt.

8. Lichteinheit nach einem der Ansprüche 1 bis 7, dadurch gekennzeichnet, daß die Drehachse des Drehknopfes (11) durch die Ausnehmung (14) des Abstützelementes (13) und den Bart (12) hindurchgeht.

9. Lichteinheit nach einem der vorstehenden Ansprüche, dadurch gekennzeichnet, daß die Ausnehmung (14) des Abstützelementes (13) ein in Längsausdehnung des Rastarms (4) verlaufender Längsschlitz ist, welcher zum freien Ende des Rastarms (4) hin geöffnet ist.

10. Lichteinheit nach einem der Ansprüche 1 bis 9, dadurch gekennzeichnet, daß die Drehachse des Drehknopfes (11) annähernd vertikal verläuft, wobei der Rastarms (4) oberhalb des Abstützelementes (13) angeordnet ist.

## Claims

1. A light unit for vehicles, comprising a headlamp (1) and arranged at the side of the headlamp (1) a lamp (2) which is pushed into a guide element (3) of the headlamp (1) with a detent arm (4) which is oriented against the direction of light emission and which reaches at its free end section (6) in a self-detenting manner with one detent element (5) behind a wall section (7) of the headlamp (1) and is positioned by means of an adjustable locking element (8) into an unlocked and locked detent position (9 or 10),
**characterised in that**
- the locking element (8) is a rotary knob (11), which is supported by the free end section (6) of the springy detent arm (4) and which is oriented with a bit (12) towards the free end of a support element (13);
- the bit (12) and a recess (14) of the support element (13) are of a size, shape and position which are matched in such a way that the bit (12) is insertible into a position (9) of rotary knob (11) which serves to unlock the detent arm (4) during engagement and disengagement of the detent element (5) in recess (14) and in a position (10) of rotary knob (11) which serves to lock the detent arm (4) oriented at least with one section towards a side surface of the support element (13).

2. Light unit according to Claim 1, **characterised in that** the rotary knob (11) has a rotary mechanism (15) at the side facing away from the bit (12).

3. Light unit according to one of Claims 1 or 2, **characterised in that** the detent arm (4) extends with its free end section (6) which supports the rotary knob (11) towards its free end and beyond the detent element (5).

4. Light unit according to Claim 3, **characterised in that** into the free end section (6) of the detent arm (4) is placed an opening (17) which serves as a mounting point for the rotary knob (11).

5. Light unit according to Claim 4, **characterised in that** the opening (17) is in the free end section (6) of detent arm (4) opened towards the free end of detent arm (4) by a tong-like design of the free end section (6), and the shanks of the tongs are springy in design, and the rotary knob (11) is inserted between the shanks of the tongs in a self-detenting manner from the free end of the detent arm (4) between the shanks.

6. Light unit according to one of Claims 1 to 5, **characterised in that** onto the casing surface of the rotary knob (11) is formed at least a radially outward protruding extension (20), which is movable between two surfaces of end section (6) of detent arm (4) serving as stops (21) and together with both stops (21) defines both end positions of the rotary knob (11).

7. Light unit according to one of the above claims, **characterised in that** the rotary knob (11) co-acts in its two end positions (8, 9) with detent marks (23) of detent arm (4).

8. Light unit according to one of Claims 1 to 7, **characterised in that** the rotary axis of rotary knob (11) passes through the cutout (14) of support element (13) and bit (12).

9. Light unit according to one of the above claims, **characterised in that** the cutout (14) of support element (13) is a longitudinal slot, which extends in the longitudinal extent of the detent arm (4) and which is open towards the free end of the detent arm (4).

10. Light unit according to one of Claims 1 to 9, **characterised in that** the rotary axis of the rotary knob (11) extends virtually vertically, and the detent arm (4) is positioned above the support element (13).

## Revendications

1. Unité d'éclairage pour véhicules, comportant un phare (1) et un feu (2) agencé latéralement par rapport au phare (1), ledit feu étant introduit dans un élément de guidage (3) du phare (1) avec un bras d'encliquetage (4) orienté à l'opposé de la direction de sortie de la lumière, ledit bras engageant, avec un élément d'encliquetage (5) situé sur son tronçon d'extrémité libre (6), en auto-encliquetage par l'arrière un tronçon de paroi (7) du phare (1) et étant susceptible d'être amené au moyen d'un élément de verrouillage (8) déplaçable jusque dans une position d'encliquetage déverrouillée (9) ou verrouillée (10),
caractérisée en ce que :
- l'élément de verrouillage (8) est un bouton tournant (11) porté par le tronçon d'extrémité libre (6) du bras d'encliquetage (4) élastique, ledit bouton étant dirigé avec un ergot (12) vers l'extrémité libre d'un élément d'appui (13),
- l'ergot (12) et un évidement (14) de l'élément d'appui (13) présentent une taille, une forme et une position si adaptées les unes aux autres que l'ergot (12) est susceptible d'être plongé dans l'évidement (14), dans une position (9) du bouton tournant (11) servant au déverrouillage du bras d'encliquetage (4) lors du décliquetage et de l'encliquetage de l'élément d'encliquetage, et dans une position (10) du bouton tournant (11) servant au verrouillage du bras d'encliquetage (4), l'ergot est dirigé au moins par un tronçon vers une surface latérale de l'élément d'appui (13).

2. Unité d'éclairage selon la revendication 1 caractérisée en ce que le bouton tournant (11) présente un dispositif de rotation (15) sur le côté détourné de l'ergot (12).

3. Unité d'éclairage selon l'une ou l'autre des revendications 1 et 2, caractérisée en ce que vers son extrémité libre, le bras d'encliquetage (4) s'étend avec le tronçon d'extrémité libre (6) portant le bouton tournant (11) au-delà de l'élément d'encliquetage (5).

4. Unité d'éclairage selon la revendication 3, caractérisée en ce qu'une ouverture (17) servant de palier pour le bouton tournant (11) est ménagée dans le tronçon d'extrémité libre (6) du bras d'encliquetage (4).

5. Unité d'éclairage selon la revendication 4, caractérisée en ce que l'ouverture (17) dans le tronçon d'extrémité libre (6) du bras d'encliquetage (4) est ouverte grâce à une réalisation en forme de pince du tronçon d'extrémité libre (6) vers l'extrémité libre du bras d'encliquetage (4), les branches de la pince étant réalisées élastiques, et le bouton tournant (11) étant mis en place à auto-encliquetage depuis l'extrémité libre du bras d'encliquetage (4) pour venir s'encliqueter automatiquement entre les branches de la pince.

6. Unité d'éclairage selon l'une quelconque des revendications 1 à 5, caractérisée en ce que sur la surface enveloppe du bouton tournant (11) est formé au moins un épaulement (20) faisant saillie radialement vers l'extérieur, qui est déplaçable entre deux surfaces du tronçon d'extrémité libre (6) du bras d'encliquetage (4), qui servent de butées (21), et lequel définit avec les deux butées (21) les deux positions finales du bouton tournant (11).

7. Unité d'éclairage selon l'une quelconque des revendications précédentes, caractérisée en ce que le bouton tournant (11) coopère dans ses deux positions finales (8, 9) avec des marques d'encliquetage (23) du bras d'encliquetage (4).

8. Unité d'éclairage selon l'une quelconque des revendications 1 à 7, caractérisée en ce que l'axe rotatif du bouton tournant (11) passe à travers l'évidement (14) de l'élément d'appui (13) et l'ergot (12).

9. Unité d'éclairage selon l'une quelconque des revendications précédentes, caractérisée en ce que l'évidement (14) de l'élément d'appui (13) est une fente oblongue s'étendant dans l'extension longitudinale du bras d'encliquetage (4), laquelle est ouverte vers l'extrémité libre du bras d'encliquetage (4).

10. Unité d'éclairage selon l'une quelconque des revendications 1 à 9, caractérisée en ce que l'axe de rotation du bouton tournant (11) s'étend approximativement à la verticale, le bras d'encliquetage (4) étant agencé au-dessus de l'élément d'appui (13).
